# EUROPÄISCHE PATENTSCHRIFT

(11) **EP 1 797 630 B1**
(45) Veröffentlichungstag und Bekanntmachung des Hinweises auf die Patenterteilung: **03.02.2010**
(21) Anmeldenummer: 04822589.0
(22) Anmeldetag: 03.11.2004
(51) Int. Cl.: H02K 21/12, H02K 21/24, H02K 41/03

(54) **VIELPOLIGER, LINEARER ODER ROTATIVER SYNCHRON-DIREKTANTRIEBSMOTOR**
MULTIPOLAR, LINEAR OR ROTATING SYNCHRONOUS DIRECT DRIVE MOTOR
MOTEUR D'ENTRAINEMENT DIRECT SYNCHRONE MULTIPOLE, LINEAIRE OU ROTATIF

(30) Priorität: 03.09.2004 DE 102004042768
(43) Veröffentlichungstag der Anmeldung: 20.06.2007
(73) Patentinhaber: INA-Drives & Mechatronics GmbH & Co oHG, 98527 Suhl (DE)
(72) Erfinder: HEINRICH, Wolfgang, 98553 Hinternah (DE); ZITZMANN, Guido, 98547 Kühndorf (DE)
(74) Vertreter: Kruspig, Volkmar
(86) Internationale Anmeldenummer: PCT/EP2004/012434
(87) Internationale Veröffentlichungsnummer: WO 2006/027023

(56) Entgegenhaltungen:
- DE-A1- 2 417 818
- US-A- 3 974 406
- US-A- 4 605 874
- US-A- 5 319 844
- US-A- 5 769 069
- PATENT ABSTRACTS OF JAPAN Bd. 2002, Nr. 02, 2. April 2002 (2002-04-02) -& JP 2001 286114 A (TOSHIBA CORP; TOSHIBA DIGITAL MEDIA ENGINEERING CORP), 12. Oktober 2001 (2001-10-12)

## Beschreibung

Die Erfindung betrifft einen vielpoligen, linearen oder rotativen Synchron-Direktantriebsmotor, umfassend ein Primärteil mit einem Joch und einer Vielzahl von Zähnen sowie zwischen den Zähnen befindlichen Nuten, in den Nuten verlaufende Wicklungsstränge einer Mehrphasenwicklung, wobei zwischen zwei Wicklungssträngen der gleichen Phasenzuordnung jeweils überlappend die Wicklungsstränge der anderen Phase oder Phasen liegen, gemäß Oberbegriff des Patentanspruchs 1.

Bekannte elektrische Maschinen weisen Zweischichten- oder Zweietagenwicklungen mit kompliziert strukturierten Wicklungsschemen auf. Da sich die Spulen dieser in sich vermaschten Teilwicklungen konstruktiv bedingt im Wickelkopf kreuzen und aneinander vorbeigeführt werden müssen, entstehen entsprechend große und voluminöse Wickelköpfe mit hohen Kupferverlusten.

Eine typische Schleifenwicklung in vermaschter Ausführungsform für einen Dreiphasenmotor ist beispielsweise aus Bala, C.; Fetita, Al., Lefter, V.: Handbuch der Wickeltechnik elektrischer Maschinen, Verlag Technik Berlin, 1976, Bild 1.5.11, vorbekannt.

Ebenfalls zum bekannten Stand der Technik gehören sogenannte geschuppte Wicklungen für Drehstromgeneratoren, die leichter beherrschbar sind. Verwiesen sei hierzu beispielsweise auf die DE 30 08 212 A1, welche verschiedene typische geschuppte Wicklungen für Drehstromgeneratoren offenbart.

Im Überlappungsbereich der Teilwicklungen geschuppter Wicklungen, die jeweils um eine Zahngruppe mit einer bestimmten Zähnezahl gewickelt sind, treten Verdickungen auf, die insgesamt den Bauraum in unerwünschter Weise vergrößern. Bei sehr langen Wicklungsschleifen, die sich über viele Nuten erstrecken, verschiebt sich die Relation von aktivem Wicklungsanteil in den Nuten zum passiven Anteil außerhalb der Nuten zuungunsten der Motoreffizienz.

Grundsätzlich erhöht ein außerhalb der Nuten verlegter Wicklungsanteil lediglich den Wicklungswiderstand und damit den Verlustanteil mit der Folge eines reduzierten Motorwirkungsgrads.

Bei allen vermaschten Wicklungen, bei denen die Wicklungsstränge der einzelnen Phasen einander überlappend in den Nuten des Primärteils befindlich und dort gewickelt sind, besteht der Nachteil, dass voluminöse Wickelköpfe mit einer schlechteren Effizienz gegenüber Motoren mit sogenannten Einzelzahnwicklungen entstehen, wobei letztere mit einem gewissen Phasenversatz in Polgruppen zusammengefasst sein können.

Ein Beispiel derartiger Einzelzahnwicklungen, die mit einem gewissen Phasenversatz in Polgruppen zusammengefasst sind, zeigt die DE 195 03 610 C2.

Bei der dortigen mehrphasigen, vielpoligen elektrisch kommutierbaren Maschine sind zonenweise entlang des Ständers verteilte Phasen vorgesehen, wobei eine Zone einer Phase entspricht und der Wicklungsleiter der Phase innerhalb der Zone in abwechselnder Richtung um unmittelbar aufeinanderfolgende Ständerpole gewickelt ist.
Die Nutbreite zwischen zwei benachbarten Ständerpolen entspricht der Breite des Wicklungsleiters, wobei innerhalb einer Polnut zusammentreffende Abschnitte des Wicklungsleiters übereinander angeordnet sind. Ein entscheidender Nachteil eines derartig ausgeführten Polgruppenmotors liegt in der erheblichen Geräuschbildung. Ursache hierfür sind über eine Polgruppe verteilte, hohe Anzugskraftschwankungen zwischen Primär- und Sekundärteil während der Relativbewegung. Derartige partielle Kräfteschwankungen rufen je nach Steifigkeit der Lagerung kleine, mit der Polfrequenz einhergehende Schwingungen und hieraus resultierende Geräusche hervor. Demzufolge ist der Einsatz von Polgruppenmotoren für bestimmte Anwendungsbereiche, wo es gerade auf eine geringe Geräuschbildung ankommt, nicht möglich.

Bei der mehrphasigen Wicklung einer elektrischen Maschine nach der Lehre nach DE 198 46 923 C1 geht es darum, diese Wicklung so auszuführen, dass der hierdurch geschaffene Motor kompakt und hochbelastbar ist. Zu diesem Zweck wird eine direkte Bewicklung der Zähne vorgenommen, und zwar durch Anwendung eines durchgängigen Litzenleiters, so dass eine Strangwicklung mit durchgängig gewickelten Spulen entsteht. Auch dieser Motor besitzt die vorstehend geschilderten Nachteile bezüglich Schwingungs- und Geräuschentwicklung.

Bei dem Verfahren zur Herstellung einer Wellenwicklung gemäß DE 101 58 267 A1 wird eine Vielzahl von parallel gewickelten und geschalteten Drähten vorgefertigt und in die Nuten des Motors eingezogen.

Ein Parallelschalten von Teilwicklungen hat jedoch den Nachteil, dass geringste Differenzen der in den Teilwicklungen erzeugten Gegenspannungen in Amplitude und Phasenlage zu ungewollten Ausgleichsströmen und ab einer bestimmten Geschwindigkeit zu nicht mehr beherrschbaren Erwärmungen und Dämpfungseffekten führen.

Für sehr schnell laufende und gleichzeitig vielpolige Motoren sind aufgrund der aus dem Stand der Technik bekannten Gegenspannungsproblematik sehr niederohmige Wicklungen mit einem hohen Wicklungsquerschnitt anzustreben. Eine an sich anzustrebende weitere Erhöhung des Wicklungsquerschnitts bei konventionellen Motoraufbauten mit Lackdrahtwicklungen in den Nuten ist aufgrund handhabbarer Drahtquerschnitte entweder begrenzt oder aber auch bei üblichen vermaschten Wicklungsarten mit erheblichem Verdrahtungsaufwand außerhalb der Nuten und damit höheren Kosten verbunden.

Bezüglich der angesprochenen Gegenspannungsproblematik ist darauf hinzuweisen, dass Synchronmotoren mit steigender Relativgeschwindigkeit zwischen Stator bzw. Primärteil und Läufer bzw. Sekundärteil eine steigende Gegenspannung entwickeln. Wenn die Gegenspannung in den Bereich der Betriebsspannung, d.h. der Zwischenkreisspannung bei Umrichtern kommt, wird der Stromfluss in den Motor begrenzt und es ist kein weiterer Geschwindigkeitszuwachs des Motors mehr möglich. Insbesondere dann, wenn ein Motor gleichzeitig eine hohe Kraft bzw. ein hohes Drehmoment und eine hohe Geschwindigkeit, d.h. eine hohe Drehzahl erzeugen soll, ist die Spannungskonstante k_{V} (k_{ω}) aufgrund der notwendigen hohen Polzahl sehr groß und der entsprechende Motor benötigt eine sehr große Betriebsspannung, um hohe Geschwindigkeiten zu erreichen. Motoren mit hoher Kraft oder Momentausbeute werden regelmäßig mit hohen Polzahlen ausgelegt, so dass grundsätzlich die Aufgabe besteht, das Problem steigender Gegenspannungen zu beseitigen.

Bei herkömmlichen Drahtwicklungen mit hohen Wicklungsquerschnitten kommt es im Übrigen bei höheren Ansteuerfrequenzen durch Wirbelstromeffekte zur Stromverdrängung in den Leiterbahnen. Dieser sogenannte SKIN-Effekt führt zu ungewollten Wärmeverlusten beim Betreiben entsprechender Motoren.

Bei weiterhin bekannten Motoren wird auf bestimmte Verhältnisse zwischen Nutzahl und Magnetpolpaarzahl abgestellt. Beispielsweise kann die Nutzahl gleich dem 6-fachen der Magnetpolpaarzahl entsprechen, wobei dann aufgrund der Polstruktur der Motor mit einer dreiphasigen vermaschten Wicklung ausgestattet ist. Durch den hohen Wiederholungsgrad in der Konstellation zwischen Nut- und Polstruktur treten den Gleichlauf störende Reluktanzeffekte auf.

Dieser Effekt ist nachweislich dann am größten, wenn die Nutzahl ein ganzzahliges Vielfaches der Polzahl ist. Jede Nut mit einer definierten Breite erzeugt bei Verschiebung des Motors relativ zu den gegenüberliegenden Magnetpolen eine elementare Reluktanzkraft. In der Summe überlagern sich die elementaren Reluktanzkräfte zu einer äußerlich messbaren Gesamtwirkung.

Bei einer Überlagerung von Einzelrastkräften ist es von Bedeutung, ob diese gleichsinnig oder gegensinnig sind bzw. wie die Phasenlage bezogen auf eine Magnetperiode ist.

Um Reluktanzrippel gering zu halten, wird üblicherweise die Breite des Nutausgangs minimiert. Auch eine Schrägstellung der Magnetpole oder eine schräge Blechung des Primärteils sind bekannt, allerdings dann mit dem Nebeneffekt einer reduzierten Kraftausbeute bzw. einem geringeren Drehmoment des Motors.

Zusammenfassend sind aus dem oben zitierten Stand der Technik Polgruppenmotoren vorbekannt, wobei hierzu auch Ausführungsformen gehören, bei denen der Wicklungsleiter innerhalb einer Zone mit wechselnder Richtung um aufeinanderfolgende Ständerpole gewickelt ist. Derartige Polgruppenmotoren eignen sich aufgrund ihrer konventionellen Wicklungsausführungen nur bedingt für die Anwendung bei hohen Geschwindigkeiten. Im Betrieb mit solchen Motoren kommt es durch interne Reluktanzkraftschwankungen und Schwingungseffekte zu unerwünschten Geräuschen.

Aus der JP 2001-286114 ist ein Motor mit einem komplizierten Wicklungsaufbau vorbekannt, wobei Leernuten vorgesehen sind, um die Restwilligkeit des motorischen Antriebes zu verringern.

Die US 4,605,874 zeigt eine bürstenlose dynamoelektrische Maschine, die einen Scheibenläufer aufweist. Im Scheibenläufer sind Nuten vorhanden, die radial zur Drehachse orientiert sind.

Die gattungsbildende US 5,319,844 geht von einem vielpoligen linearen oder rotativ arbeitenden Synchron-Direktantriebsmotor aus, der Wellenwicklungen umfasst.

Aus dem Vorgenannten ist es daher Aufgabe der Erfindung, einen weiterentwickelten, vielpoligen, linearen oder rotativen Synchron-Direktantriebsmotor zu schaffen, welcher eine Wicklung aufweist, die extremen Anforderungen in Bezug auf Gleichlaufeigenschaften, hohe Relativgeschwindigkeiten, Geräuscharmut, Kompaktheit und einfacher Herstellung genügt.

Der erfindungsgemäße Motor soll bei einer hohen Polzahl eine effiziente und zugleich niederohmige Wicklung besitzen, so dass ein Einsatz möglich ist, wo Relativgeschwindigkeiten im Luftspalt von etwa 10m/sec bis 50m/sec und höher auftreten und wobei ein besonderer Gleichlauf mit minimaler Geräuschbildung erforderlich ist. Der Motor soll sich unter Beachtung der vorerwähnten Eigenschaften insbesondere auch für Anwendungen im Bereich der Medizintechnik eignen oder aber auch für den Einsatz im Bereich des Maschinenbaus als Antrieb für schnelle Spindeln oder Drehtische für eine spanende, insbesondere Schleifbearbeitung.

Die Lösung der Aufgabe der Erfindung erfolgt mit einem vielpoligen, linearen oder rotativen Synchron-Direktantriebsmotor gemäß der Merkmalskombination nach Patentanspruch 1, wobei die Unteransprüche mindestens zweckmäßige Ausgestaltungen und Weiterbildungen umfassen.

Demnach wird eine mehrphasige vermaschte Wicklung je Motorphase mit einem im wesentlichen durchgängigen Wicklungsleiter mäanderförmig durch die jeweiligen Nuten des Primärteils verlegt und die Wicklung mehrlagig ausgeführt.

Diese bevorzugte mäanderförmige Verlegung des Wicklungsleiters sichert kurze, kompakte Wickelköpfe und damit geringe Wicklungswiderstände sowie eine hohe Effizienz des Motors.

Aufgrund des vorstehenden durchgängigen Ausführungsprinzips der Wicklungsleiter folgt eine Reihenschaltung der Nutwicklungen mit Vorteilen in Bezug auf die beim Stand der Technik nicht zufriedenstellend gelöste Gegenspannungsproblematik.

Bei dem bevorzugten Einsatz einer isolierten Kupferlitze als im wesentlichen durchgängigem Wicklungsleiter, die bei entsprechend großem Querschnitt mit hohem Strom belastbar ist und welche bei geringen Windungszahlen auch nur geringe Gegenspannungen induziert, ist es möglich, den Motor für extrem hohe Geschwindigkeiten bzw. Drehzahlen auszulegen.

Darüber hinaus minimiert die Verwendung einer elektrisch isolierten Litze bei einer hochfrequenten Ansteuerung den SKIN-Effekt, so dass im Vergleich zu einer Wicklung mit dickem Kupferdraht weitere Vorteile resultieren.

Eine Litzenwicklung ist darüber hinaus im Vergleich zu konventionellen Drahtwicklungen wesentlich flexibler und lässt sich technologisch einfacher verlegen, so dass bei einem hohen Kupferquerschnittsanteil im Leiter eine durchgängigere Serienschaltung überhaupt erst möglich wird.

Der Vorteil der realisierbaren Reihenschaltung gegenüber einer mehradrig durchgeschleiften parallel verschalteten Kupferdrahtwicklung besteht in ihrer besonderen Eignung für höchste Relativgeschwindigkeiten. In Parallelzweigen fließen nämlich aufgrund von Impendanzunterschieden und Magnetisierungsdifferenzen immer unerwünschte Ausgleichsströme, die bei höheren Geschwindigkeiten stark zunehmen und zu einer unerwünschten Erwärmung führen.

Der spezielle lagenweise Aufbau der in sich vermaschten, sehr flachen Mäanderwicklungen bewirkt im Bereich der Kreuzungspunkte der Teilwicklungen nur sehr geringe Kopfverdickungen und ein sehr gutes Ineinanderschmiegen der einzelnen Lagen, wodurch der Motor sehr kompakt ausführbar ist.

Die Nuten des Motors sind so breit ausgeführt, wie der Litzenleiter einschließlich der vorhandenen bzw. notwendigen Isolationsschicht des Leiters.

Durch diese Maßnahme liegen die einzelnen mäanderförmigen Lagen der Litzenleiter unmittelbar übereinander und werden innerhalb der Nut zwischen den Zähnen eingeklemmt und dort kraftschlüssig fixiert. Diese konstruktive Maßnahme erleichtert den Fertigungsprozess beim Herstellen der Wicklung, der entweder manuell, aber auch automatisiert vorgenommen werden kann.

Bei einer Ausführungsform der Erfindung wird eine Litze mit hohem Leitungsquerschnitt im Bereich von 2,5 bis 6mm² bei Außendurchmessern bis zu ca. 5mm eingesetzt. In diesem Bereich ist das Verhältnis von Kupferquerschnitt und äußerer Isolation sehr günstig und gut anpassbar an Nutbreiten, die vorzugsweise im Bereich von 3 bis 5mm realisiert werden.

Der vorstehend geschilderte Wicklungsaufbau gestattet im Fall der angestrebten vermaschten Wicklung erstmals die Realisierung hoher Polzahlen und damit eine Steigerung der Kraft- und Momentausbeute und der Effizienz des Motors.
Durch die Realisierbarkeit relativ kleiner Nutteilungen kann die Gesamtpolbreite, die sich bei einem Dreiphasenmotor über drei Nuten und bei einem Zweiphasenmotor über zwei Nuten erstreckt, entsprechend klein gehalten werden.

Um ein unerwünschtes Nutrasten zu minimieren, wird ein vorteilhaftes Verhältnis von Nutzahl zur Polpaarzahl des Motors gewählt.

Bei einem Dreiphasenmotor beträgt die Nutzahl mehr als das 6-fache der Polpaarzahl der Magnetanordnung. Die Mäanderwicklung ist so verteilt, dass über den Gesamtmotor in gleichmäßig verteilten Abständen jeweils eine Nut als Leernut unbewickelt bleibt, wobei die Zahl der aktiv bewickelten Nuten dem 6-fachen der Polpaarzahl entspricht.

Bei einem Zweiphasenmotor ist die Nutzahl größer als das 4-fache der Polpaarzahl der Magnetanordnung. Die Mäanderwicklung ist hier so verteilt, dass ebenfalls über den Gesamtmotor in gleichmäßig verteilten Abständen jeweils eine Nut als Leernut unbewickelt bleibt, wobei die Zahl der aktiv bewickelten Nuten dem 4-fachen der Polpaarzahl entspricht.

Beim mäanderförmigen Bewickeln des Primärteils werden die Leernuten übergangen und das Wickelschema fortgesetzt.

Die Wahl der Nutzahl mit einer Differenz größer als die.notwendige Nutzahl bringt einen Phasenversatz von Nut zu Nut in Relation zum Magnetraster und führt daher zu einem nahezu vollständigen Kompensieren der Reluktanzkräfte und des unerwünschten Nutrastens. Diese unerwünschten Effekte werden auch dadurch vermindert, dass der Nutabstand und damit die Zähne sehr schmal gestaltet werden können.

Das Einfügen der Leernuten dient darüber hinaus dem Ausgleich der Phasenlage der Wicklung relativ zur Magnetpolanordnung.

Grundsätzlich kann die erfindungsgemäße Lehre bei geschlossenen, rotativen oder ähnlichen Linearmotoren oder Bogensegmentmotoren zur Anwendung kommen. Die auf ein entsprechend definiertes Motorelement entfallenden Relativkräfte und Geschwindigkeiten sind über den gegebenen Radius umrechenbar.

Bei einem rotativen Motor oder bei einem rotativen Motorsegment kann dieses koaxial oder wie ein Scheibenläufer flach aufgebaut werden. Im Falle einer flachen Anordnung sind die Symmetrieachsen der Nuten und der Magnetpole zum jeweiligen Drehpunkt hin gerichtet, wobei die Magnetpole in einer Ausführungsform keilförmige Flanken besitzen.

Zusammenfassend weist der zu schaffende Synchron-Direktantriebsmotor Wicklungsstränge für die jeweiligen Phasenwicklungen auf, die aus einem durchgängigen, hochflexiblen Litzenleiter bestehen, wobei der Litzenleiter jeweils mäanderförmig um eine Zahngruppe durch die schmal ausführbaren Nuten geführt ist.

Die Gesamtwicklung einer jeweiligen Phase wird durch in den jeweiligen Nuten übereinander geschichtete Litzenleiter gebildet.

Jede Nut weist eine Breite auf, welche dem Durchmesser des isolierten Litzenleiters entspricht. Die Litzenleiter der Wicklungsstränge der weiteren Phase oder der weiteren Phasen sind systematisch zwischen den Nuten der ersten Phase versetzt geführt, wobei durch den lagenweisen Wicklungsaufbau der vermaschten Mäanderwicklungsstränge im Bereich der Kreuzungspunkte der Teilwicklungen außerhalb der Nuten flache, nur gering voluminöse Wicklungsköpfe mit den geschilderten Vorteilen entstehen.

Dabei sind erfindungsgemäß die Mäanderwicklungsstränge über die Gesamtlänge des Primärteils so verteilt ausgeführt, dass in gleichmäßigen Abständen Leernuten verbleiben.

Dei Erfindung soll nachstehend anhand eines Ausführungsbeispiels sowie unter Zuhilfenahme von Figuren näher erläutert werden.

Hierbei zeigen:
- Fig. 1a: einen Abschnitt eines erfindungsgemäßen Motors mit erkennbaren Wicklungssträngen;
- Fig. 1b: eine Draufsicht des Motors gemäß der Darstellung nach Fig. 1a;
- Fig. 2: einen erfindungsgemäßen dreiphasigen rotativen Motor mit 38 Nuten und 12 Magnetpolen, wobei die Mäanderwicklung vierlagig aufgebaut ist;
- Fig. 3: eine Ausführungsform des erfindungsgemäßen Motors als Scheibenläufer bzw. Scheibenläufersegment in der Draufsicht auf das Primärteil 1 bzw. das Sekundärteil 2 und

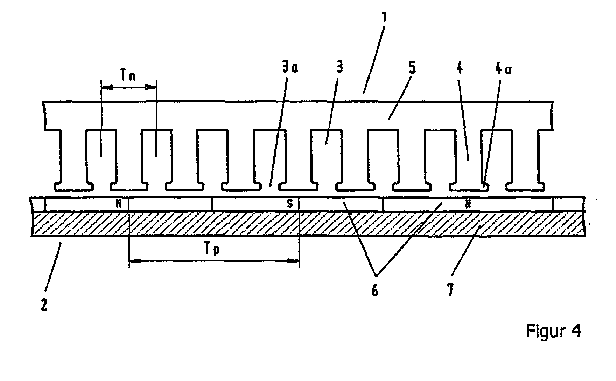

- Fig. 4: eine Prinzipdarstellung einer Motorkonstruktion mit erkennbarer Nutteilung Tₙ und Tₚ.

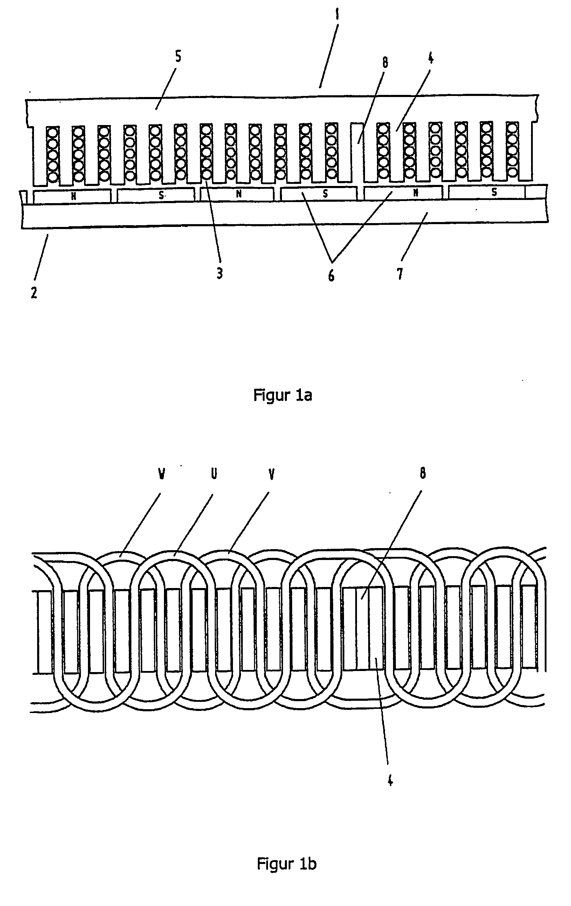

Bei den Darstellungen nach Fig. 1a und 1b ist zunächst ein Primärteil 1 mit einem Joch 5 vorhanden, wobei das Primärteil 1 eine Vielzahl von gleichmäßig beabstandeten Zähnen 4 mit dazwischen befindlichen Nuten 3 besitzt.

Das Sekundärteil 2, welches dem Primärteil 1 gegenüberliegend angeordnet ist, weist eine Vielzahl von Permanentmagneten 6 auf, die eine wechselnde Polarität besitzen und die auf einer gemeinsamen Rückflußsohle 7 angeordnet sind.

Die Nuten 3 sind gemäß Ausführungsbeispiel annähernd so breit wie die dazwischen liegenden Zähne 4, welche keine ausgeprägten Zahnköpfe besitzen. Die Ausführungsform der Nuten ist beim gezeigten Beispiel weitgehend parallel realisiert.

Innerhalb der Nuten ist eine dreiphasige Litzenwicklung mäanderförmig verlegt (siehe auch Fig. 1b). Innerhalb einer Motorphase U ist der entsprechende Litzenleiter in der jeweils vierten Nut verlegt. Dazwischen liegen in den Nuten die Litzenleiter der Phasen V und W mit der Sequenz, wie es die zugehörige Magnetanordnung verlangt.

Für die Ausführungsform der Erfindung ist es unwesentlich, ob die Litzenleiter aller drei Phasen mit dem gleichen Wicklungssinn verlegt sind oder nicht.

Eine vorteilhafte Ausgestaltung der Erfindung ergibt sich jedoch, wenn der Litzenleiter der Phase W zwischen der Phase U und V liegend, mit entgegengesetztem Wicklungssinn verlegt wird. Hierdurch ergibt sich ein sehr gleichmäßiges Wicklungsschema, wie es die Fig. 1b zeigt.

Die Mäanderwicklung ist bei dem Beispiel nach den Fig. 1 a und 1b fünflagig aufgebaut.
Die Kreuzungspunkte liegen zwischen den einzelnen Litzenleitern und sind von Lage zu Lage versetzt und ineinander verschachtelt in der Form, dass die gesamte mehrlagige Wicklung ineinander verflochten ist.

Innerhalb des Motors sind jeweils zwölf Nuten 3 bewickelt, wobei dann eine Leernut 8 folgt. Nach der Leernut 8 wird das Wickelschema entsprechend fortgesetzt.

Am Beispiel eines Segmentmotors mit einer Bogenlänge von 500 mm auf einem Radius von 550 mm zum Direktantrieb einer medizinischen Apparatur mit Drehzahlen bis zu 250 U/min konnte überraschend nachgewiesen werden, dass die realisierte erfindungsgemäße Anordnung gegenüber einem gleichgroßen Polgruppenmotor mit gröberer Nutung eine deutlich geringere Geräuschemission hervorruft. Im unmittelbaren Vergleich bei ansonsten übereinstimmenden Bedingungen ergab sich beim erfindungsgemäßen Motor eine Geräuschreduktion von 75 dB auf 62 dB.

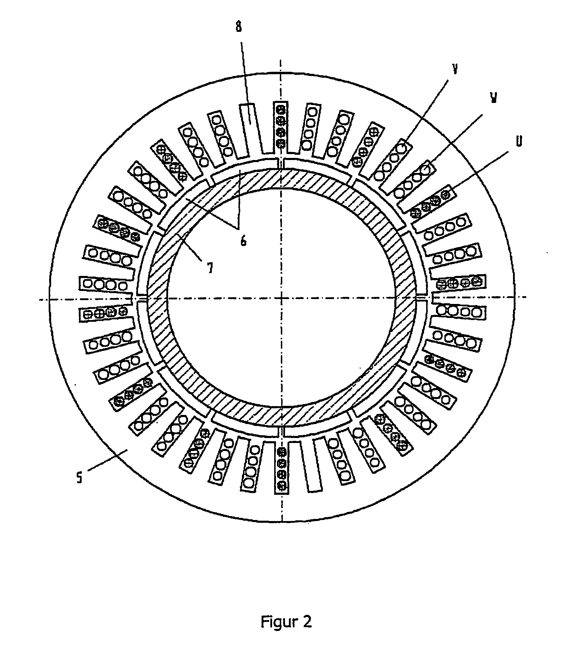

Die Fig. 2 zeigt einen erfindungsgemäß realisierten dreiphasigen rotativen Motor mit 38 Nuten und 12 Magnetpolen. Bei dieser Ausführungsform ist die Mäanderwicklung vierlagig aufgebaut.

Von den dortigen 38 Nuten sind 36 bewickelt, so dass zwei Leernuten verbleiben. Der Abstand zwischen den Leernuten beträgt 18 Nuten.

Bei einem Luftspaltdurchmesser von 90 mm und einer Luftspaltlänge von 100 mm erzeugt der beispielhafte Motor bei einem Dauerdrehmoment von etwa 10 Nm eine Drehzahl von über 10000 U/min.

Der Zyklus der Reluktanzrippel ergibt sich T_{R} = 360°/ 19x6= 3,15°. Das heißt pro Umdrehung des Motors entstehen 114 Relunktanzrippel, die sich aufgrund ihres Phasenversatzes nahezu vollständig kompensieren.

Der erfindungsgemäße Motor hat außer seiner hohen Endgeschwindigkeit von über 47 m/s auch einen besonders ausgeprägt guten Gleichlauf und besitzt im Vergleich zu niedrigpoligen Spindelantrieben auch eine höhere Drehmomentausbeute und damit eine verbesserte Effizienz. Ansonsten notwendige Maßnahmen; wie das Schrägen von Magnetpolen oder der Nuten innerhalb des Blechpakets sind überflüssig.

Die vorgeschlagene Wicklung bringt erhebliche technologische Vorteile gegenüber konventionellen Schleifen- oder Welleriwicklungen, einhergehend mit einer dadurch wesentlich kompakteren Motorbauweise.

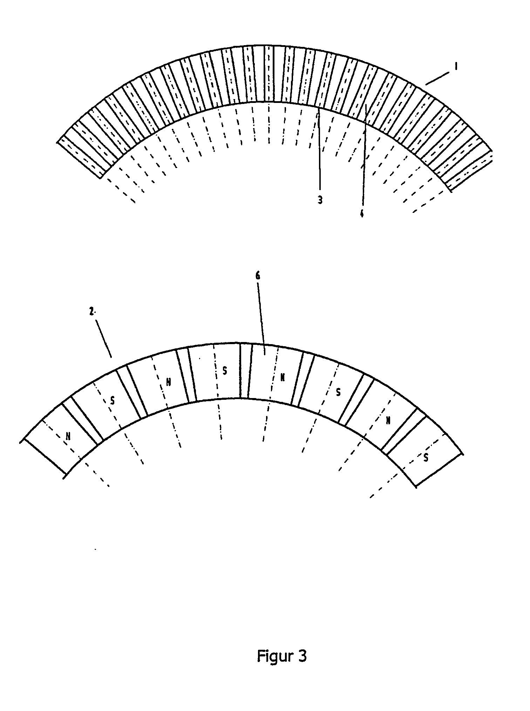

Fig. 3 zeigt eine mögliche Ausführungsform des erfindungsgemäßen Motors als Scheibenläufer bzw. Scheibenläufersegment in einer Draufsicht auf das Primärteil 1 bzw. auf das Sekundärteil 2.

Die Parallelnuten 3 sind mit ihren Symmetrieachsen zum Drehpunkt bzw. zum Mittelpunkt des Motors hin gerichtet.

Die Magnetpole 6 sind ebenfalls mit ihren Symmetrieachsen (strichpunktierte Linien) zum Drehpunkt orientiert. Bei kleinen Radien ist die Wahl von keilförmigen bzw. trapezförmigen Magnetgeometrien von Vorteil.

Die Litzenwicklung ist hier sehr gut anpassbar, und zwar auch an derartige, nichtparallele Nutstrukturen.

Der vorgestellte erfindungsgemäße Motor lässt sich bei einem generatorischen Betrieb, d.h. bei erzwungener Relativbewegung, auch zur Erzeugung elektrischer Energie einsetzen. Auch hier kommen die beschriebenen Vorteile zur Geltung. Anwendungsseitig sind hier beispielsweise Radantriebe in kommerziellen Transportfahrzeugen denkbar, die bei Schub- bzw. bei Bremsvorgängen generatorisch betrieben zur Energieerzeugung dienen und welche diese Energie Akkumulatoren zur Speicherung zur Verfügung stellen.

Zusammenfassend gelingt es mit dem erfindungsgemäßen Motor, über die Ausführung einer mehrphasigen vermaschten Wicklung je Motorphase mit einem durchgängigen Wicklungsleiter, welcher mäanderförmig durch die Nuten des Primärteils verlegt und mehrlagig aufgebaut ist, den gewünschten hohen Gleichlauf bei ebenfalls hohen Relativgeschwindigkeiten und geringer Geräuschemission zu erreichen, wobei der Motor in sich kompakt ist und in einfacher Weise hergestellt werden kann.

## Patentansprüche

1. Vielpoliger, linearer oder rotativer Synchron-Direktantriebsmotor, umfassend
ein Primärteil (1) mit einem Joch (5) und einer Vielzahl von Zähnen (4) sowie zwischen den Zähnen befindlichen Nuten (3), und
in den Nuten (3) verlaufende Wicklungsstränge (u; v; w) einer mehrlagigen Mehrphasenwicklung, wobei jeder Wicklungsstrang einer jeweiligen Phasenwicklung aus einem durchgängigen flexiblen Litzenleiter besteht, wobei zwischen zwei Wicklungssträngen der gleichen Phasenzuordnung jeweils überlappend die Wicklungsstränge der anderen Phase oder Phasen liegen dergestalt, dass dabei außerhalb der Nuten zwischen den einzelnen Litzenleitern gebildete Kreuzungspunkte von Lage zu Lage versetzt und ineinander verschachtelt sind in der Form, dass die gesamte mehrlagige Mehrphasenwicklung ineinander verflochten ist,
wobei jeder Litzenleiter jeweils mäanderförmig um eine Zahngruppe unmittelbar durch die Nuten (3) verlegt geführt ist, wobei die Gesamtwicklung einer jeweiligen Phase durch in den jeweiligen Nuten (3) direkt unmittelbar übereinander geschichtete Litzenleiter gleicher Phasenzuordnung gebildet wird, und wobei
die Litzenleiter der Wicklungsstränge (u; v; w) der weiteren Phase oder Phasen symmetrisch zwischen den Nuten (3) der ersten Phase versetzt geführt sind, wobei durch den lagenweisen Wicklungsaufbau je Nut (3) der vermaschten Mäanderwicklungsstränge im Bereich der Kreuzungspunkte der Teilwicklungen außerhalb der Nuten (3) flache, kleinbauende Wicklungsköpfe entstehen,
weiterhin jede Nut (3) eine Breite aufweist, welche dem Durchmesser des isolierten Litzenleiters entspricht
und weiter umfassend
ein Sekundärteil (2), welches dem Primärteil (1) gegenüberliegend angeordnet ist und das eine Vielzahl von Permanentmagneten (6) wechselnder Polarität auf einer gemeinsamen Rückflusssohle (7) befindlich, aufweist,
wobei die Nutausgänge eine gleichmäßige Nutteilung T_{N} und die Permanentmagnetpole eine gleichmäßige Polteilung T_{P} besitzen,
**dadurch gekennzeichnet, dass**
jeder Litzenleiter in Form einer Kupferschaltlitze mit einer Vielzahl von Einzeladern und äußerer Isolation ausgebildet ist und
die Mäanderwicklungsstränge über die Gesamtlänge des Primärteils (1) so verteilt ausgeführt sind, dass in gleichmäßig verteilten Abständen Leernuten (8) verbleiben.

2. Motor nach Anspruch 1,
**dadurch gekennzeichnet, dass**
die Litzenleiter in den Nuten (3) klemmend gehalten und hierdurch fixiert sind.

3. Motor nach einem der vorangegangenen Ansprüche,
**dadurch gekennzeichnet, dass**
die Litzenleiter einen Leitungsquerschnitt von im wesentlichen 2,5mm² bis 6,0mm² bei einem Außendurchmesser von bis zu 5mm aufweisen.

4. Motor nach einem der vorangegangenen Ansprüche,
**dadurch gekennzeichnet, dass**
bei einem Dreiphasenmotor die Nutzahl größer als das 6-fache der Polpaarzahl der Magnetanordnung ist, wobei die Zahl der aktiv bewickelten Nuten (3) dem 6-fachen der Polpaarzahl entspricht, die Mäanderwicklung so verteilt ist, dass über den Gesamtmotor in gleichmäßig verteilten Abständen jeweils eine Nut (3) unbewickelt bleibt und das Wickelschema über die Leernut (8) hinweg beibehalten ist.

5. Motor nach einem der Ansprüche 1 bis 3,
**dadurch gekennzeichnet, dass**
bei einem Zweiphasenmotor die Nutzahl größer als das 4-fache der Polpaarzahl der Magnetanordnung ist, wobei die Zahl der aktiv bewickelten Nuten (3) dem 4-fachen der Polpaarzahl entspricht, die Mäanderwicklung so verteilt ist, dass über den Gesamtmotor in gleichmäßig verteilten Abständen jeweils eine Nut (3) unbewickelt bleibt und das Wickelschema über die Leernut (8) hinweg behalten ist.

6. Motor nach einem der vorangegangenen Ansprüche,
**dadurch gekennzeichnet, dass**
jede Nut (3) über ihre gesamte Tiefe weitgehend parallele Flanken aufweist.

7. Motor nach Anspruch 1,
**dadurch gekennzeichnet, dass**
die Nutteilung kleiner als 8mm und die Magnetteilung kleiner als 25mm gewählt ist.

8. Motor nach einem der Ansprüche 1 bis 7,
**dadurch gekennzeichnet, dass**
der Motor zum Direktantrieb eines Computertomographen verwendet wird.

9. Motor nach einem der Ansprüche 1 bis 7,
**dadurch gekennzeichnet, dass**
der Motor rotativ als Scheibenläufer oder Scheibenläufersegment aufgebaut ist, wobei die Nutmittelachsen strahlenförmig zum Drehpunkt orientiert sind.

10. Motor nach Anspruch 9,
**dadurch gekennzeichnet, dass**
die Permanentmagnetpole trapezförmig oder keilförmig ausgebildet sind, wobei die schmalere Stirnseite jeweils zum Drehpunkt des Motors orientiert ist.

11. Motor nach Anspruch 1,
**dadurch gekennzeichnet, dass**
maximal jede 6. Nut und minimal jede 24. Nut als unbewickelte Leernut (8) ausgeführt ist.

## Claims

1. A four pole linear or rotating synchronous direct drive motor comprising:
a primary component (1) with a yoke (5) and a plurality of teeth (4) and grooves (3) disposed between the teeth; and
winding strands (u; v; w) of a multilayer multiphase winding extending in the grooves (3), wherein each winding strand of a respective phase winding is comprised of a continuous flexible wire conductor, wherein between two winding strands with the same phase association the winding strands of the other phase or the other phases are disposed respectively overlapping, so that intersection points thus formed outside of the grooves between the particular wire conductors are offset from one another from layer to layer and nested into one another, so that the entire multilayer multiphase winding is interwoven,
wherein each wire conductor is respectively routed in meanders about a group of teeth directly through the grooves (3), wherein the entire winding of a respective phase is formed by wire conductors with the same phase association layered directly on top of one another in the respective grooves (3); and
wherein the wire conductors of the winding strands (u; v; w) of the next phase or phases are routed offset symmetrically between the grooves (3) of the first phase, wherein flat small winding heads are created by the layer wise winding configuration per groove (3) of the meshed meander winding strands in the portion of the cross over points of the partial windings outside of the grooves (3),
furthermore, each groove (3) comprises a width which corresponds to the diameter of the insulated wire conductor,
and further comprising
a secondary component (2) which is disposed opposite to the primary component (1) and which comprises a plurality of permanent magnets (6) with alternating polarity disposed on a common back flow sole (7),
wherein the groove exits have a constant groove pitch T_{N} and the permanent magnet poles have a constant pole pitch T_{P},
wherein each wire conductor is configured as a copper wire conductor with a plurality of wires and an outer insulation and
the meandering winding strands are configured distributed over the entire length of the primary component (1), so that empty grooves (8) are provided with evenly distributed offsets.

2. A motor according to claim 1, wherein the wire conductors are clamped and fixated in the grooves (3).

3. A motor according to one of the proceeding claims, wherein the wire conductors have a conductor cross section of substantially 2.5 mm² to 6.0 mm² with an outer diameter of up to 5 mm.

4. A motor according to one of the proceeding claims, wherein for a three phase motor the groove number is greater than 6 times the pole pair number of the magnet assembly, wherein the number of the actively wound grooves (3) corresponds to six times the pole pair number, the meandering winding is distributed, so that a groove (3) respectively remains unwound at evenly distributed offsets over the entire motor, and the winding pattern is maintained over the empty groove (8).

5. A motor according to one of the preceding claims 1 - 3, wherein for a two phase motor the groove number is greater than 4 times the pole pair number of the magnet assembly, wherein the number of the actively wound grooves (3) corresponds to four times the pole pair number, the meandering winding is distributed offsets over the entire motor, and the winding pattern is maintained over the empty groove (8).

6. A motor according to one of the preceding claims, wherein each groove (3) comprises substantially parallel flanks over its entire depth.

7. A motor according to claim 1, wherein the groove pitch is less than 8 mm and the magnet pitch is less than 25 mm.

8. A motor according to one of the claims 1- 7, wherein the motor is used for directly driving a computer tomograph.

9. A motor according to one of the claims 1 - 7, wherein the motor is configured with respect to its rotation as a disc runner or disc runner segment, wherein the groove center axes are radially oriented towards the point of rotation.

10. A motor according to claim 9, wherein the permanent magnet poles are configured trapeze shaped or wedge shaped, wherein the narrower face is oriented respectively to the point of rotation of the motor.

11. A motor according to claim 1, wherein at the most each 6^{th} groove and at the least each 24^{th} groove is configured as a non wound empty groove (8).

## Revendications

1. Moteur d'entraînement direct synchrone multipôle, linéaire ou rotatif, comprenant
une partie primaire (1) avec une culasse (5) et une pluralité de dents (4) ainsi que des gorges (3) situées entre les dents, et
des nappes de bobinages (u ; v ; w) d'un bobinage multiphasé à plusieurs couches, qui s'étendent dans les gorges (3), chaque nappe de bobinage d'un bobinage de phase respectif étant constituée de conducteurs en torons flexibles continus, tels que les nappes de bobinages de l'autre phase ou des autres phases sont situées respectivement entre deux nappes de bobinages présentant la même attribution de phase, de telle manière que les points de croisement ici formés à l'extérieur des gorges entre les conducteurs en torons individuels sont décalés d'une couche à l'autre et imbriqués les uns dans les autres de telle forme que la totalité du bobinage multiphasé multicouches est tressée,
dans lequel chaque conducteur en toron est guidé respectivement sous forme de méandres immédiatement autour d'un groupe de dents en étant posé à travers les gorges (3), le bobinage total d'une phase respective étant formé par des conducteurs en torons disposés directement en couches les uns au-dessus des autres dans les gorges respectives (3) et présentant la même attribution de phase, et dans lequel
les conducteurs en torons des nappes de bobinages (u ; v ; w) de l'autre phase ou des autres phases sont guidés avec décalage symétriquement entre les gorges (3) de la première phase, de sorte qu'en raison de la structure en couches du bobinage, dans chaque gorge (3), des nappes de bobinages en méandres maillées dans la zone des points de croisement des bobinages partiels à l'extérieur des gorges (3), il se forme des têtes de bobinages planes de petite taille,
chaque gorge (3) présente en outre une largeur qui correspond au diamètre du conducteur en toron isolé,
et comprenant en outre
une partie secondaire (2), laquelle est agencée à l'opposé de la partie primaire (1) et comporte une pluralité d'aimants permanents (6) de polarités alternantes qui se trouvent sur une semelle de bouclage commune (7),
dans lequel les sorties de gorges possèdent une subdivision de gorges régulière T_{N}, et les pôles des aimants permanents possèdent une subdivision polaire régulière TP,
**caractérisé en ce que**
chaque conducteur en toron est réalisé sous la forme d'un toron en cuivre avec une pluralité de brins individuels et une isolation extérieure, et
les nappes de bobinages en méandres sont réalisées de manière répartie sur la totalité de la largeur de la partie primaire (1) de telle manière qu'il reste des gorges vides (8) à des distances régulièrement réparties.

2. Moteur selon la revendication 1,
**caractérisé en ce que** les conducteurs en torons sont maintenus par coincement dans les gorges (3) et sont fixés grâce à cela.

3. Moteur selon l'une des revendications précédentes,
**caractérisé en ce que** les conducteurs en torons possèdent une section transversale sensiblement de 2,5 mm² à 6,0 mm², pour un diamètre extérieur allant jusqu'à 5 mm.

4. Moteur selon l'une des revendications précédentes,
**caractérisé en ce que** dans un moteur triphasé, le nombre de gorges est supérieur à six fois le nombre de paires de pôles de l'agencement des aimants, et le nombre des gorges (3) recevant des bobinages actifs correspond à six fois le nombre de paires de pôles, et le bobinage en méandres est réparti de telle façon que sur la totalité du moteur, il reste à des distances régulièrement réparties respectivement une gorge (3) dépourvue de bobinage, et le schéma de bobinage reste conservé au-delà de la gorge vide (8).

5. Moteur selon l'une des revendications 1 à 3,
**caractérisé en ce que** dans un moteur biphasé, le nombre de gorges est supérieur à quatre fois le nombre de paires de pôles de l'agencement des aimants, le nombre des gorges (3) recevant des bobinages actifs correspond à quatre fois le nombre de paires de pôles, et le bobinage en méandres est réparti de telle façon que sur la totalité du moteur, il reste à des distances régulièrement réparties respectivement une gorge (3) dépourvue de bobinage, et le schéma de bobinage reste conservé au-delà de la gorge vide (8).

6. Moteur selon l'une des revendications précédentes,
**caractérisé en ce que** chaque gorge (3) comporte des flancs largement parallèles sur toute sa profondeur.

7. Moteur selon la revendication 1,
**caractérisé en ce que** la subdivision des gorges est inférieure à 8 mm, et la subdivision des aimants est choisie inférieure à 25 mm.

8. Moteur selon l'une des revendications 1 à 7,
**caractérisé en ce que** le moteur est utilisé pour l'entraînement direct d'un tomographe assisté par ordinateur.

9. Moteur selon l'une des revendications 1 à 7,
**caractérisé en ce que** le moteur est réalisé de manière rotative sous forme de rotor ou de segment de rotor à disque, dans lequel les axes médians des gorges sont orientés sous forme de rayons vers le centre de rotation.

10. Moteur selon la revendication 9,
**caractérisé en ce que** les pôles des aimants permanents sont réalisés en forme de trapèze ou en forme de coin, de sorte que le côté frontal plus étroit est orienté respectivement vers le centre de rotation du moteur.

11. Moteur selon la revendication 1,
**caractérisé en ce que** chaque sixième gorge au maximum et chaque vingt-quatrième gorge au minimum est réalisée sous forme de gorge vide (8) dépourvue de bobinage.
